# EUROPÄISCHE PATENTSCHRIFT

(11) **EP 3 781 808 B1**
(45) Veröffentlichungstag und Bekanntmachung des Hinweises auf die Patenterteilung: **07.06.2023**
(21) Anmeldenummer: 19717852.8
(22) Anmeldetag: 11.04.2019
(51) Int. Cl.: F03D 1/06

(54) **WINDENERGIEANLAGEN-ROTORBLATT UND WINDENERGIEANLAGE**
WIND TURBINE ROTOR BLADE AND WIND TURBINE
PALE DE ROTOR D'ÉOLIENNE ET ÉOLIENNE

(30) Priorität: 16.04.2018 DE 102018108906
(43) Veröffentlichungstag der Anmeldung: 24.02.2021
(73) Patentinhaber: Wobben Properties GmbH, 26607 Aurich (DE)
(72) Erfinder: BÜRKNER, Falko, 28757 Bremen (DE); HOFFMANN, Alexander, 26721 Emden (DE)
(74) Vertreter: Eisenführ Speiser
(86) Internationale Anmeldenummer: PCT/EP2019/059256
(87) Internationale Veröffentlichungsnummer: WO 2019/201738

(56) Entgegenhaltungen:
- WO-A1-2017/076095
- DE-A1-102010 046 519
- US-A- 4 685 864

## Beschreibung

Die vorliegende Erfindung betrifft ein Windenergieanlagen-Rotorblatt sowie eine Windenergieanlage.

Rotorblätter moderner Windenergieanlagen können mittlerweile so lang sein, dass ein Transport des Rotorblattes in einem Stück nicht mehr möglich ist. Daher kann ein Rotorblatt einer Windenergieanlage mehrteilig ausgestaltet sein, so dass die jeweiligen Teile separat zur Baustelle angeliefert werden und dann dort zusammengesetzt werden.

WO 2017/085088 A1 zeigt ein Rotorblatt einer Windenergieanlage mit einer Blattinnenseite, einer Blattaußenseite und einem ersten und zweiten Rotorblattteil, welche mittels einer Befestigungseinheit in einer Teilungsebene miteinander befestigt sind. Die Befestigungseinheit weist einen Querbolzen sowie ein Stahlseil auf, welches durch ein Loch in den zweiten Rotorblattteil geführt wird und in der Klemmeinheit eingeklemmt ist. Das zweite Ende des Stahlseils ist in der ersten Klemmeinheit auf der Blattaußenseite eingeklemmt. Die zweite Klemmeinheit ist auf der Blattinnenseite vorgesehen.

In der prioritätsbegründenden deutschen Patentanmeldung hat das Deutsche Patent- und Markenamt die folgenden Dokumente recherchiert: DE 29 21 152 A1, DE 10 2010 046 518 A1, DE 10 2010 046 519 A1 und WO 2017/085 088 A1. Weiterer Stand der Technik ist in WO 2017/076095 A1 offenbart.

Es ist eine Aufgabe der vorliegenden Erfindung, ein Windenergieanlagen-Rotorblatt sowie eine Windenergieanlage vorzusehen, welche eine verbesserte Verbindung der Teile eines mehrteiligen Windenergieanlagen-Rotorblattes ermöglicht.

Diese Aufgabe wird durch ein Windenergieanlagen-Rotorblatt nach Anspruch 1 gelöst.

Somit wird ein Windenergieanlagen-Rotorblatt mit einer Blattaußenseite, einer Wandung mit einem Laminat, einer Blattinnenseite und mindestens einem ersten und zweiten Rotorblattteil vorgesehen. Das mindestens eine erste und zweite Rotorblattteil werden mittels mindestens einer Verbindungseinheit in einer Teilungsebene miteinander befestigt. Die Verbindungseinheit weist mindestens ein Seil mit einem ersten Ende mit Seilfasern auf, welche in oder an dem Laminat der Wandung befestigt sind. Die Verbindungseinheit weist wenigstens einen Vorsprung jeweils an dem ersten und zweiten Rotorblattteil auf. Die Vorsprünge sind jeweils fest mit der Wandung des Rotorblattes verbunden. Das mindestens eine Seil ist an mindestens einem Vorsprung verbunden. Die Verbindungseinheit weist mindestens ein Spannelement auf, mittels welchem die Vorsprünge an dem ersten und zweiten Rotorblattteil miteinander verspannbar sind. Die Seilfasern des mindestens einen Seils sind aufgefächert in dem Laminat befestigt oder mit dem Laminat verbunden.

Gemäß einem weiteren Aspekt der vorliegenden Erfindung weist jedes Seil einen Befestigungsabschnitt, insbesondere eine Seilschlaufe auf, mit welchem das Seil an einem Vorsprung befestigbar ist.

Gemäß einem weiteren Aspekt der vorliegenden Erfindung weist das Rotorblatt mindestens einen Zentrierbolzen auf, welcher im Bereich der Trennebenen sowohl in das erste als auch in das zweite Rotorblattteil hineinragt.

Gemäß einem weiteren Aspekt der vorliegenden Erfindung sind Verbindungseinheiten sowohl auf der Blattinnenseite als auch auf der Blattaußenseite vorgesehen.

Gemäß einem weiteren Aspekt der vorliegenden Erfindung wird eine Windenergieanlage mit einem oben beschriebenen Rotorblatt vorgesehen.

Gemäß einem weiteren Aspekt der vorliegenden Erfindung wird eine Windenergieanlage mit mindestens zwei Rotorblattanschlüssen und zwei Windenergieanlagen-Rotorblättern vorgesehen, welche jeweils eine Rotorblattaußenseite, eine Wandung mit einem Laminat und eine Rotorblattinnenseite aufweisen. Die Rotorblätter werden mittels einer Mehrzahl von Verbindungseinheiten an den Rotorblatt-Anschlussstellen gekoppelt. Die Verbindungseinheiten weisen jeweils ein Seil mit einem ersten Ende auf, welches eine Mehrzahl von Seilfasern aufweist, welche in oder an dem Laminat des Rotorblattes vorgesehen sind. Das Seil weist einen Befestigungsabschnitt auf, mit welchem das Seil an einem Vorsprung befestigt ist, welcher fest mit dem Laminat des Rotorblattes gekoppelt ist. Die Verbindungseinheiten weisen jeweils ein Spannelement auf, welches die Vorsprünge mit einer Rotorblattanschlussstelle vorspannt. Die Seilfasern der Seile sind aufgefächert in dem Laminat befestigt oder mit dem Laminat verbunden.

Die Erfindung betrifft einen Gedanken, zwei Bauteile (beispielsweise GFK-Bauteile, glasfaserverstärkte Kunststoff-Bauteile oder kohlenfaserverstärkte Kunststoff-Bauteile) eines Rotorblatts einer Windenergieanlage so zu verbinden, dass eine Wartung der Verbindung auch aus dem Inneren des Rotorblattes möglich ist. Zur Verbindung von zwei Bauteilen eines Windenergieanlagen-Rotorblattes wird eine Befestigungseinheit vorgesehen. Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines mehrteiligen Windenergieanlagen-Rotorblatts gemäß der Erfindung, und
- Fig. 3A: zeigt eine schematische Schnittansicht einer Trennstelle von Fig. 2,
- Fig. 3B: zeigt eine schematische Draufsicht auf eine Trennstelle von Fig. 2,
- Fig. 4A: zeigt eine schematische Schnittansicht einer Trennstelle eines Rotorblattes von Fig. 2,
- Fig. 4B: zeigt eine schematische Draufsicht auf eine Trennstelle eines Rotorblattes von Fig. 2,
- Fig. 5A: zeigt eine schematische Schnittstelle einer Trennstelle eines Rotorblattes von Fig. 2, und
- Fig. 5B: zeigt eine schematische Draufsicht auf eine Schnittstelle eines Rotorblattes von Fig. 2.

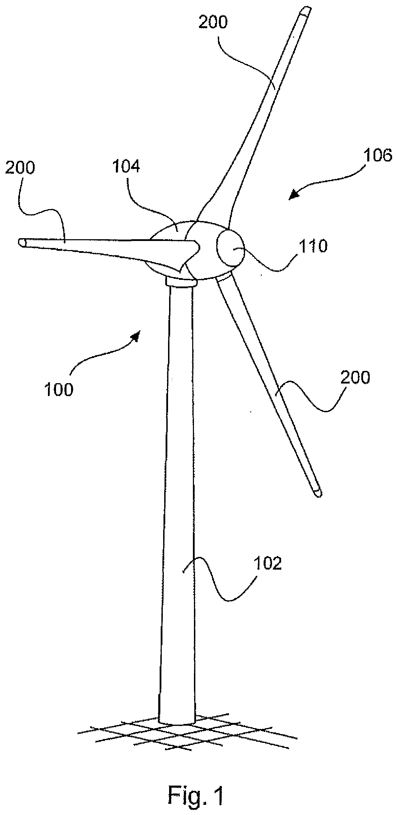

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

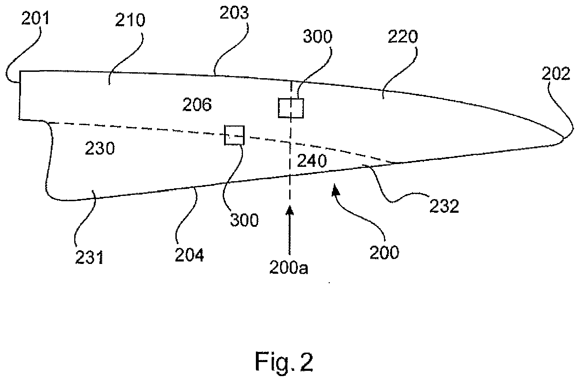

Fig. 2 zeigt eine schematische Darstellung eines mehrteiligen Windenergieanlagen-Rotorblatts gemäß der Erfindung. Das Rotorblatt weist eine Rotorblattwurzel 201, eine Rotorblattspitze 202, eine Rotorblattvorderkante 203 und eine Rotorblatthinterkante 204 auf und besteht beispielsweise aus drei Teilen bzw. Abschnitten 210 - 230. Das Rotorblatt 200 weist eine Teilungsebene 200a auf. Die Rotorblattteile 210 - 230 können beispielsweise mittels Verbindungseinheiten 300 und der Teilungsebene 200a aneinander befestigt werden. Der Abschnitt 230 kann zweigeteilt 231, 232 ausgestaltet sein, wobei der erste Teil 231 an den ersten Abschnitt 210 und der zweite Teil 232 an den zweiten Abschnitt 220 befestigt ist.

Das Rotorblatt 200 weist ferner eine Wandung 205, eine Rotorblattinnenseite 206 (auf der Innenseite der Wandung) und eine Rotorblattaußenseite 207 auf. Das Rotorblatt 200 wird typischerweise hergestellt, indem zwei Halbschalen miteinander befestigt werden bzw. aneinander verklebt werden. Damit entsteht eine Rotorblattinnenseite 206 und eine Rotorblattaußenseite 207, welches die äußere Oberfläche des Rotorblattes darstellt.

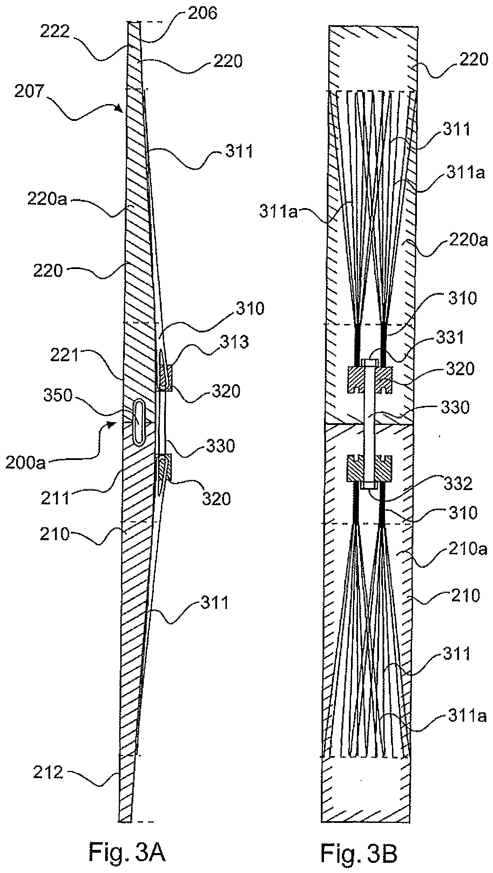

Fig. 3A zeigt eine schematische Schnittansicht einer Trennstelle von Fig. 2. Das Windenergieanlagen-Rotorblatt 200 weist ein erstes und zweites Teil 210, 220 auf, welche durch eine Trennstelle 200a voneinander getrennt sind.

Das erste und zweite Rotorblattteil 210, 220 weisen jeweils an ihrem der Trennebene 200a zugewandten Ende 211, 221 eine dickere Wandung auf, d. h. das Laminat 210a, 220a kann dort dicker ausgestaltet sein. Das erste und zweite Rotorblattteil 210, 220 werden über mindestens eine Verbindungseinheit 300 miteinander verbunden. Die Verbindungseinheit 300 weist mindestens ein erstes Seil 310, mindestens einen Vorsprung 320 und ein Spannelement 330 auf. Das Spannelement 330 dient dazu, einen Vorsprung 320 an dem ersten Teil 210 und einen Vorsprung 320 an dem zweiten Teil 220 miteinander zu verbinden bzw. gegeneinander vorzuspannen. Die Verbindungseinheit 300 weist ferner mindestens ein Seil 310 mit einem ersten Ende 311 auf, welches eine Mehrzahl von Seilfasern 311 aufweist, welche kraftschlüssig an einem Laminat 210a, 220a verbunden bzw. verklebt sind. Das Seil 310 weist einen Befestigungsabschnitt 313 auf, mittels welchem das Seil 310 an oder in dem Vorsprung 320 befestigt ist. Die Vorsprünge 320 sind fest mit dem Laminat 210a, 220a verbunden.

Optional können die fächerförmigen Seilfasern 311 mittels eines Fadens 311a vernäht werden, um den Faserverlauf bei trockenem Einlegen in die Blattform sicherzustellen. Optional werden die fächerförmigen Seilfasern 311 trocken in das Laminat eingelegt bzw. während der Herstellung des Laminats eingelegt.

Die Vorsprünge 320 sind auf einer Rotorblattinnenseite 206 vorgesehen. Entsprechend sind auch die ersten Enden 311 der Seile 310 an der Blattinnenseite 206 vorgesehen.

Gemäß einem Aspekt der vorliegenden Erfindung werden die Seilfasern 311 der Seile 310 bei der Herstellung des Blattlaminats trocken in die Form für das Blattlaminat eingelegt. Anschließend kann beispielsweise mittels Vakuuminfusion das Rotorblattteil fertiggestellt werden. Hierbei kann erreicht werden, dass die fächerförmig ausgebreiteten Seilfasern nach der Infusion kraftschlüssig mit dem Blattmaterial des Rotorblattteils verbunden sind.

Erfindungsgemäß sind keine Durchgangsbohrungen in dem Laminat mehr notwendig, um die beiden Rotorblattteile miteinander zu verbinden. Dies ist insbesondere vorteilhaft, weil damit die Dicke des Laminats reduziert werden kann.

Gemäß der Erfindung können die Spannelemente 330 mittels eines Drehmomentschraubers verspannt werden. Zur Überprüfung der Vorspannkraft kann das Spannelement 330 nachträglich erneut mit einem Drehmoment belastet werden.

Gemäß einem Aspekt der vorliegenden Erfindung können die Seilschlaufen 311 so positioniert werden, dass abhebende Kräfte der Seilfasern zum übrigen Blattlaminat reduziert werden. Hierzu können die Seilschlaufen im Bereich des flanschnahen dickwandigen Laminats positioniert werden. Der Bereich der Lastübertragung ist dabei im Laminat auf dem abgewickelten oder geschäfteten Laminatbereich vorgesehen. Abhebende Kräfte können damit durch Umlenkung der Seilfasern am Knickpunkt des Flanschlaminats reduziert werden.

Optional kann zur weiteren Verbesserung der Verbindung zwischen dem ersten und zweiten Rotorblattabschnitt 210, 220 mindestens ein Zentrierbolzen 350 in dem Laminat 210a, 220a im Bereich der Trennstelle 200a vorgesehen sein.

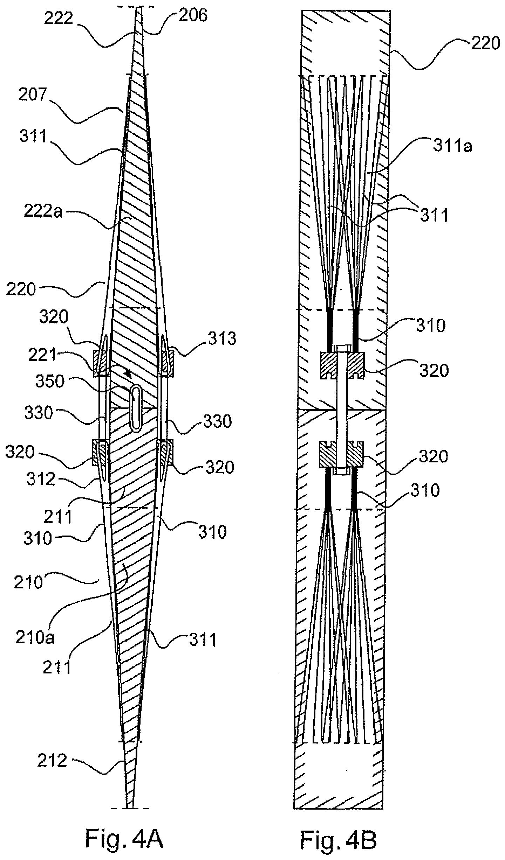

Fig. 4A zeigt einen schematischen Querschnitt und Fig. 4B zeigt eine schematische Draufsicht auf eine Trennstelle eines Rotorblattes gemäß einem Aspekt der Erfindung. Während in dem Ausführungsbeispiel von Fig. 3A und 3B die Verbindungseinheit 300 auf der Rotorblattinnenseite 207 vorgesehen ist, ist in dem Ausführungsbeispiel von Fig. 4A und 4B sowohl eine Verbindungseinheit 300 auf der Rotorblattinnenseite 206 als auch auf der Rotorblattaußenseite 207 vorgesehen. Der Aufbau der Verbindungseinheit 300 gemäß dem Ausführungsbeispiel von Fig. 4A und 4B entspricht dem Aufbau der Befestigungseinheit 300 von dem Ausführungsbeispiel von Fig. 3A und 3B. Jede der Verbindungseinheiten 300 (auf der Rotorblattaußenseite und der Rotorblattinnenseite) weist damit mindestens ein Seil 310 mit Seilfasern 311 auf, welche am ersten Ende des Seils aufgefächert ausgestaltet sind und in das Laminat 222a, 210a eingebettet bzw. befestigt sind. Die Seile 310 sind mit den Vorsprüngen 320, welche beispielsweise als Knagge ausgestaltet sein können, verbunden. Mittels den Spannelementen 330 können die Vorsprünge 320 gegeneinander verspannt werden. Somit kann eine Verbindung von zwei Rotorblattteilen ermöglicht werden, ohne dass hierzu Durchgangsbohrungen in dem Laminatbereich notwendig sind. Optional können Zentrierbolzen 350 vorgesehen sein. Die Dicke des Laminats 320 im Bereich der Trennstelle ist größer als beim Rest des Blattes. Die Vorsprünge können fest mit dem Laminat 210a, 220a verbunden sein.

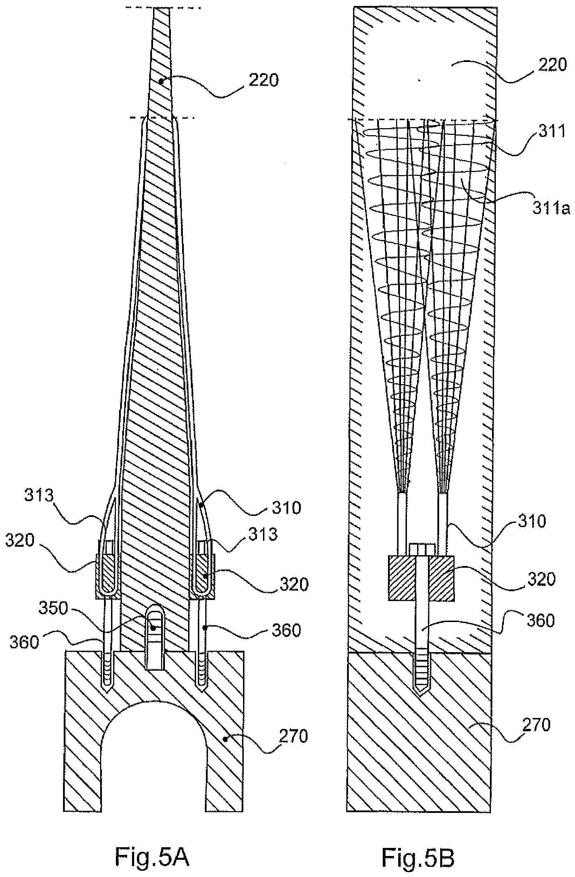

Fig. 5A zeigt einen schematischen Querschnitt einer Flanschverbindung und Fig. 5B zeigt eine schematische Draufsicht auf eine Flanschverbindung gemäß der Erfindung. In dem Ausführungsbeispiel von Fig. 5A wird ein Flansch 270 mittels der Verbindungseinheiten 300 mit einem Teil 220 des Rotorblattes verbunden. Die Verbindungseinheiten 300 weisen dazu Seile 310 mit Seilfasern am ersten Ende 311 auf, welche aufgefächert ausgestaltet sind. Optional können die aufgefächerten Seilfasern 311 mit einem Faden 311a vernäht sein. Wie in den anderen Ausführungsbeispielen werden die Seilfasern 311 in das Laminat des Teils des Rotorblattes integriert. Die Verbindungseinheiten 300 weisen ferner Vorsprünge bzw. Knaggen 320 auf, welche mit dem Laminat des Rotorblattes 200 verbunden sind und ein Teil der Seile 310 aufnehmen. Insbesondere kann beispielsweise eine Seilschlaufe 313 um die Vorsprünge 320 herum gelegt werden bzw. mit denen verbunden werden. Die Verbindungseinheiten 300 können ferner ein Spannelement 360 aufweisen, dessen eines Ende in den Verbindungsflansch 270 z. B. eingeschraubt ist. Am anderen Ende kann beispielsweise eine Schraube vorgesehen sein, um eine Vorspannung auf die Seile aufbringen zu können.

In dem Ausführungsbeispiel von Fig. 5A und 5B wird lediglich eine Hälfte der Befestigungseinheit von Fig. 4 verwendet, um ein Rotorblatt an einem Flansch zu befestigen.

In dem Ausführungsbeispiel von Fig. 5A und Fig. 5B ist eine zweireihige Flanschverbindung dargestellt.

Erfindungsgemäß wird somit ein mehrteiliges Rotorblatt vorgesehen, welches vorteilhafterweise im Bereich der Trennstelle zwischen dem ersten und zweiten Rotorblattteil eine reduzierte Laminatdicke aufweist, ohne die Stabilität der Verbindung zu gefährden.

## Patentansprüche

1. Windenergieanlagen-Rotorblatt (200), mit
einer Blattaußenseite (207),
einer Wandung (205) mit einem Laminat,
einer Blattinnenseite (206), und
mindestens einem ersten und zweiten Rotorblattteil (210, 220), welche mittels mindestens einer Verbindungseinheit (300) in einer Teilungsebene (200a) miteinander befestigt sind,
wobei die Verbindungseinheit (300) mindestens ein Seil (310) mit einem ersten Ende (311) mit Seilfasern aufweist, welche in dem Laminat der Wandung (205) befestigt sind bzw. mit dem Laminat verbunden sind,
wobei die Verbindungseinheit (300) mindestens einen Vorsprung (320) jeweils an dem ersten und zweiten Rotorblattteil (210, 220) aufweist, wobei die Vorsprünge (320) jeweils fest mit dem Laminat der Wandung (205) des Rotorblattes (200) auf der Blattinnenseite (206) verbunden sind,
wobei das mindestens eine Seil an einem der Vorsprünge verbunden ist,
wobei die Verbindungseinheit (300) mindestens ein Spannelement (330) aufweist, mittels welchem die Vorsprünge (320) an dem ersten und zweiten Rotorblattteil (210, 220) miteinander vorspannbar sind,
wobei die Seilfasern (311) des mindestens einen Seils (310) aufgefächert in dem Laminat befestigt sind oder mit dem Laminat verbunden sind.

2. Windenergieanlagen-Rotorblatt (200) nach Anspruch 1, wobei
jedes Seil (310) einen Befestigungsabschnitt (313), insbesondere eine Seilschlaufe, aufweist, mit welchem das Seil (310) an dem Vorsprung (320) befestigbar ist.

3. Windenergieanlagen-Rotorblatt (200) nach einem der Ansprüche 1 bis 2, ferner mit
mindestens einem Zentrierbolzen (350), welcher im Bereich der Trennebene (200a) sowohl in das erste als auch in das zweite Rotorblattteil (210, 220) hineinragt.

4. Windenergieanlagen-Rotorblatt (200) nach einem der Ansprüche 1 bis 3, wobei
Verbindungseinheiten (300) sowohl auf der Blattinnenseite (206) als auch auf der Blattaußenseite (207) vorgesehen sind.

5. Windenergieanlage, mit
mindestens einem Windenergieanlagen-Rotorblatt nach einem der Ansprüche 1 bis 4.

6. Windenergieanlage, mit
mindestens zwei Rotorblatt-Anschlussstellen (270) und
mindestens zwei Windenergieanlagen-Rotorblättern (200), welche jeweils eine Rotorblattaußenseite (207), eine Wandung (205) mit einem Laminat und eine Rotorblattinnenseite (206) aufweisen,
wobei die Windenergieanlagen-Rotorblätter (200) mittels einer Mehrzahl von Verbindungseinheiten (300) an den Rotorblatt-Anschlussstellen (270) gekoppelt sind,
wobei die Verbindungseinheiten (300) jeweils ein Seil (310) mit einem ersten Ende (311) aufweisen, welches eine Mehrzahl von Seilfasern aufweist, welche in oder an dem Laminat des Rotorblattes (200) vorgesehen sind,
wobei das Seil (310) einen Befestigungsabschnitt (313) aufweist, mit welchem das Seil an einem Vorsprung (320) befestigt ist, welcher fest mit dem Laminat des Rotorblattes (200) gekoppelt ist,
wobei die Verbindungseinheiten (300) jeweils mindestens ein Spannelement (360) aufweisen, welches den jeweiligen Vorsprung (320) mit einer Rotorblattanschlussstelle (270) vorspannt,
wobei die Seilfasern (311) der Seile (310) aufgefächert in dem Laminat befestigt sind oder mit dem Laminat verbunden sind.

## Claims

1. A wind turbine rotor blade (200) comprising
a blade outer side (207),
a wall (205) having a laminate,
a blade inner side (206), and
at least a first and a second rotor blade part (210, 220) which are fixed together by means of at least one connecting unit (300) in a separation plane (200a),
wherein the connecting unit (300) has at least one cable (310) with a first end (311) with cable fibres which are fixed in or are connected to the laminate of the wall (205),
wherein the connecting unit (300) has at least one projection (320) at the first and second rotor blade parts (210, 220) respectively, wherein the projections (320) are respectively fixedly connected to the laminate of the wall (205) of the rotor blade (200) on the blade inner side (206),
wherein the at least one cable (310) is connected to one of the projections,
wherein the connecting unit (300) has at least one tensioning element (330) by means of which the projections (320) at the first and second rotor blade parts (210, 220) can be braced with each other,
wherein the cable fibres (311) of the at least one cable (310) are fixed in or connected to the laminate in fanned-out relationship.

2. A wind turbine rotor blade (200) according to claim 1 wherein
each cable (310) has a fixing portions (313), in particular a cable loop, with which the cable (310) can be fixed to the projection (320).

3. A wind turbine rotor blade (200) according to one of claims 1 to 2 and further comprising
at least one centring bolt (350) which in the region of the separation plane (200a) projects both into the first and also into the second rotor blade part (210, 220).

4. A wind turbine rotor blade (200) according to one of claims 1 to 3 wherein
there are provided connecting units (300) both on the blade inner side (206) and also on the blade outer side (207).

5. A wind turbine comprising
at least one wind turbine rotor blade according to one of claims 1 to 4.

6. A wind turbine comprising
at least two rotor blade connecting locations (270), and
at least two wind turbine rotor blades (200) which respectively have a rotor blade outer side (207), a wall (206) having a laminate and a rotor blade inner side (206),
wherein the wind turbine rotor blades (200) are coupled by means of a plurality of connecting units (300) at the rotor blade connecting locations (270),
wherein the connecting units (300) respectively have a cable (310) with a first end (311) which has a plurality of cable fibres which are provided in or at the laminate of the rotor blade (200),
wherein the cable (310) has a fixing portion (313) with which the cable is fixed at a projection (320) which is fixedly coupled to the laminate of the rotor blade (200),
wherein the connecting units (300) each have at least one tensioning element (360) which braces the respective projection (320) with a rotor blade connecting location (270),
wherein the cable fibres (311) of the cables (310) are fixed in or connected to the laminate in fanned-out relationship.

## Revendications

1. Pale de rotor d'éolienne (200), avec
un côté extérieur de pale (207),
une paroi (205) avec un stratifié,
un côté intérieur de pale (206), et
au moins une première et une deuxième partie de pale de rotor (210, 220), lesquelles sont fixées l'une à l'autre dans un plan de division (200a) au moyen d'au moins une unité de liaison (300),
dans laquelle l'unité de liaison (300) présente au moins un câble (310) avec une première extrémité (311) avec des fibres de câble, lesquelles sont fixées dans le stratifié de la paroi (205) ou sont reliées au stratifié,
dans laquelle l'unité de liaison (300) présente au moins une partie faisant saillie (320) respectivement sur la première et la deuxième partie de pale de rotor (210, 220), dans laquelle les parties faisant saillie (320) sont reliées respectivement de manière solidaire au stratifié de la paroi (205) de la pale de rotor (200) sur le côté intérieur de pale (206),
dans laquelle l'au moins un câble est relié sur une des parties faisant saillie,
dans laquelle l'unité de liaison (300) présente au moins un élément de serrage (330), au moyen duquel les parties faisant saillie (320) peuvent être précontraintes les unes aux autres sur la première et la deuxième partie de pale de rotor (210, 220),
dans laquelle les fibres de câble (311) de l'au moins un câble (310) sont fixées de manière répartie dans le stratifié ou sont reliées au stratifié.

2. Pale de rotor d'éolienne (200) selon la revendication 1, dans laquelle
chaque câble (310) présente une section de fixation (313), en particulier une boucle de câble, avec laquelle le câble (310) peut être fixé sur la partie faisant saillie (320).

3. Pale de rotor d'éolienne (200) selon l'une quelconque des revendications 1 à 2, en outre avec
au moins un boulon de centrage (350), lequel dépasse, dans la zone du plan de séparation (200a), à la fois dans la première et dans la deuxième partie de pale de rotor (210, 220).

4. Pale de rotor d'éolienne (200) selon l'une quelconque des revendications 1 à 3, dans laquelle
des unités de liaison (300) sont prévues à la fois sur le côté intérieur de pale (206) et sur le côté extérieur de pale (207).

5. Eolienne avec
au moins une pale de rotor d'éolienne selon l'une quelconque des revendications 1 à 4.

6. Eolienne avec
au moins deux emplacements de raccordement de pale de rotor (270), et
au moins deux pales de rotor d'éolienne (200), lesquelles présentent respectivement un côté extérieur de pale de rotor (207), une paroi (205) avec un stratifié et un côté intérieur de pale de rotor (206),
dans laquelle les pales de rotor d'éolienne (200) sont couplées sur les emplacements de raccordement de pale de rotor (270) au moyen d'une multitude d'unités de liaison (300),
dans laquelle les unités de liaison (300) présentent respectivement un câble (310) avec une première extrémité (311), laquelle présente une pluralité de fibres de câble, lesquelles sont prévues dans ou sur le stratifié de la pale de rotor (200),
dans laquelle le câble (310) présente une section de fixation (313), avec laquelle le câble est fixé sur une partie faisant saillie (320), laquelle est couplée de manière solidaire au stratifié de la pale de rotor (200),
dans laquelle les unités de liaison (300) présentent respectivement au moins un élément de serrage (360), lequel précontraint la partie faisant saillie (320) respective à un emplacement de raccordement de pale de rotor (270),
dans laquelle les fibres de câble (311) des câbles (310) sont fixées de manière répartie dans le stratifié ou sont reliées au stratifié.
